Europäisches Patentamt

European Patent Office

Office européen des brevets

(19)

(11) Veröffentlichungsnummer: **0 209 096**
**B1**

(12) **EUROPÄISCHE PATENTSCHRIFT**

(45) Veröffentlichungstag der Patentschrift:
**22.03.89**

(51) Int. Cl.⁴: **B 08 B 15/00, F 16 L 41/00**

(21) Anmeldenummer: **86109557.8**

(22) Anmeldetag: **12.07.86**

(54) **Einrichtung zum Absaugen und Sammeln von Gasen, insbesondere von Kraftfahrzeug-Auspuffgasen, in einer Montage- oder Betriebshalle.**

(30) Priorität: **16.07.85 DE 3525293**

(43) Veröffentlichungstag der Anmeldung:
**21.01.87 Patentblatt 87/4**

(45) Bekanntmachung des Hinweises auf die Patenterteilung:
**22.03.89 Patentblatt 89/12**

(84) Benannte Vertragsstaaten:
**AT BE CH DE FR GB IT LI LU NL SE**

(56) Entgegenhaltungen:
**EP-A- 0 012 894**
**EP-A- 0 067 126**
**DE-A- 2 430 439**
**GB-A- 1 516 931**
**US-A- 4 287 405**

(73) Patentinhaber: **Jentzsch, Horst, Waldenbucherstrasse 9, D-7447 Aichtal (DE)**
(84) Benannte Vertragsstaaten: **BE CH DE FR GB IT LI LU NL AT**

(73) Patentinhaber: **Schuppler, Berthold, Haldenweg 37, D-7414 Wernau (DE)**
(84) Benannte Vertragsstaaten: **BE CH DE FR GB IT LI LU NL AT**

(73) Patentinhaber: **BAYERISCHE MOTOREN WERKE Aktiengesellschaft, Petuelring 130, D-8000 München 40 (DE)**
(84) Benannte Vertragsstaaten: **DE FR GB SE**

(72) Erfinder: **Jentzsch, Horst, Waldenbucherstrasse 9, D-7447 Aichtal (DE)**
Erfinder: **Schuppler, Berthold, Haldenweg 37, D-7414 Wernau (DE)**

(74) Vertreter: **Witte, Alexander, Dr.-Ing., Schickhardtstrasse 24, D-7000 Stuttgart 1 (DE)**

## Beschreibung

Die Erfindung betrifft eine Einrichtung zum Absaugen und Sammeln von Gasen, insbesondere von Kraftfahrzeug-Auspuffgasen, in einer Montage- oder Betriebshalle, mit einem raumfesten Saugschlitzkanal, der an einer Seite mit einer elastischen, axial verlaufenden Lippendichtung versehen ist, in der eine Saugdüse mindestens eines axial entlang von Führungsprofilen bewegbaren Wagens dicht geführt ist, wobei an die Saugdüse eine gasführende Leitung angeschlossen ist, und in dem Saugschlitzkanal über ein Sauggebläse ein Unterdruck erzeugt wird.

Eine derartige Einrichtung ist aus der DE-PS 28 55 325 bekannt.

Einrichtungen dieser Art werden zum Absaugen und Sammeln von Gasen und Abgasen verwendet, wenn das Gas oder Abgas an einem Ort aufgenommen werden soll, der sich innerhalb einer Montage- oder Betriebshalle o.dgl. räumlich verändert. Ein typisches Anwendungsbeispiel für derartige Einrichtungen sind Endmontagehallen von Kraftfahrzeugherstellern. Während der Endmontage und -prüfung werden nämlich die Motoren der Kraftfahrzeuge bereits in Betrieb gesetzt, so daß am Auspuff der Kraftfahrzeuge Auspuffgase anfallen. Gleichzeitig werden die Kraftfahrzeuge längs eines Förderbandes durch die Halle bewegt. Da es sehr aufwendig und darüber hinaus auch gefährlich wäre, die Auspuffgase in die Halle dringen zu lassen und großräumig aus der Halle abzusaugen, schließt man den Schlauch mit einer geeigneten Tülle und Klemme direkt an den Auspuff der Kraftfahrzeuge an und läßt die Wagen entlang des Saugschlitzkanales mit dem vom Band bewegten Kraftfahrzeug «mitwandern». Am Ende des Bandes wird der Schlauch wieder vom Auspuff gelöst und der Wagen gelangt über eine geeignete Rückführeinrichtung wieder zurück an den Anfang des Bandes.

Weiterhin kann eine derartige Einrichtung zur Verwendung bei Kraftfahrzeugen auch in Betriebshallen eingesetzt werden, in denen eine Betriebsprüfung von Kraftfahrzeugen stattfindet, beispielsweise auf Omnibus-Betriebshöfen, bei Technischen Überwachungsvereinen oder dergleichen. Auch in diesem Falle wird das Kraftfahrzeug, beispielsweise zur Bremsprüfung von Achse zu Achse in einem mehr oder weniger geschlossenen Raum bewegt und durch die eingangs genannte Einrichtung können Abgase unmittelbar an der Stelle abgesaugt werden, wo sie anfallen.

Es versteht sich jedoch, daß das Einsatzgebiet dieser Einrichtungen keineswegs auf die Absaugung von Kraftfahrzeug-Auspuff-Gasen beschränkt ist. Es können vielmehr ebenso gut sonstige Gase oder Abgase, auch Dämpfe und dergleichen, abgesaugt werden, ebenso wie Gase mit festen Schwebeteilchen wie z.B. Luft mit Staub, Holzspänen und ähnlichem.

Die eingangs genannte, aus der DE-PS 28 55 325 bekannte Einrichtung, verfügt über einen Wagen, der im oberen Bereich mit Rollen versehen ist, die auf einem Führungsprofil laufen, das unmittelbar an den unterhalb des Wagens verlaufenden Saugschlitzkanal angeformt ist. Der Wagen wird vom bewegten Objekt, beispielsweise dem vom Band geförderten Kraftfahrzeug, mitgeschleppt.

Die bekannte Einrichtung, die somit «über Kopf» arbeitet, erweist sich in denjenigen Einsatzfällen als nachteilig, in denen der Raum über dem Förderband uneingeschränkt zur Verfügung stehen muß, beispielsweise zum Verfahren von Laufkränen, zum Positionieren von automatisierten Fertigungseinrichtungen und dergleichen mehr.

Der Erfindung liegt daher die Aufgabe zugrunde, eine Einrichtung der eingangs gennanten Art dahingehend weiterzubilden, daß die Vorteile der mobilen Absaugung von Gasen erhalten bleiben, gleichzeitig jedoch der Raum oberhalb eines Förderbandes oder ähnlichem uneingeschränkt zur Verfügung steht.

Diese Aufgabe wird erfindungsgemäß dadurch gelöst, daß der Saugschlitzkanal unterhalb von axial bewegbaren Montagerahmen angeordnet ist und die Wagen mit diesem synchron bewegbar sind, daß die Lippendichtung mit ihren Lippen nach oben weist und daß die Leitung von unten an eine Öffnung im Montagerahmen ansetzbar ist.

Die der Erfindung zugrundeliegende Aufgabe wird damit vollkommen gelöst.

Durch die Unterfluranordnung der Absaugeinrichtung steht der Raum oberhalb der Montagerahmen uneingeschränkt zur Verfügung, so daß dort Transport- und Montagearbeiten ohne jede Behinderung vorgenommen werden können.

Bei einer bevorzugten Ausgestaltung der Erfindung ist auf dem Montagerahmen ein Kraftfahrzeug angeordnet und der Auspuff des Kraftfahrzeuges ist mit der Öffnung verbunden.

Diese Maßnahme hat besondere Vorteile bei der Endmontage von Kraftfahrzeugen, weil die Kraftfahrzeuge auf den Montagerahmen bereits von oben an die Öffnung angeschlossen werden können, noch bevor sie die Absaugstrecke erreichen, auf der der Motor in Betrieb genommen wird. In diesem Bereich können die Wagen selbsttätig von unten an die Öffnung heranfahren und die Verbindung zum Saugschlitzkanal herstellen, so daß von oben keinerlei Montagearbeiten mehr erforderlich sind. Dies erleichtert die Endmontage beträchtlich, insbesondere weil auch aus den bereits genannten Gründen für die Montage der gesamte Raum oberhalb der Montagerahmen zur Verfügung steht.

Bei einer bevorzugten Ausgestaltung dieser Variante verbindet ein abnehmbarer Krümmer den Auspuff mit der Öffnung.

Diese Maßnahme hat den Vorteil, daß ein bevorzugt im wesentlichen starr ausgebildeter Krümmer mit wenigen Handgriffen die Verbindung zwischen Auspuff und Öffnung herstellen kann.

Eine besonders gute Wirkung wird dabei dadurch erzielt, daß im Montagerahmen ein verschließbarer Hohlraum zum Aufnehmen des Krümmers angeordnet ist.

Diese Maßnahme hat den Vorteil, daß jeder Montagerahmen bereits alles Notwendige enthält, um den Auspuff des Kraftfahrzeuges an die Öffnung anzuschließen, so daß der Krümmer bei Bedarf auf dem Hohlraum entnommen und montiert werden kann, während die Demontage ebenso einfach möglich ist, wenn das Kraftfahrzeug den Montagerahmen verläßt. In diesem Falle kann dann der Krümmer einfach in dem Hohlraum verstaut werden, so daß er beim nächsten Montagespiel wieder für das nächste Kraftfahrzeug zur Verfügung steht.

Bei einer bevorzugten Ausgestaltung der Erfindung ist die Öffnung über eine Mehrzahl von Stichkanälen mit einer Mehrzahl nur nach oben offener und mittels Deckel verschließbarer Öffnungen verbunden, die über einen Abschnitt des Montagerahmens verteilt angeordnet sind.

Diese Maßnahme hat den Vorteil, daß ein und derselbe Montagerahmen für unterschiedliche Kraftfahrzeugmodelle verwendet werden kann, bei denen sich der Auspuff an unterschiedlicher Position befindet. Je nach gerade montiertem Modell kann dann der Auspuff mit einer der Öffnungen verbunden werden, während die übrigen Öffnungen durch die Deckel verschlossen bleiben. Auch diese Maßnahme erhöht damit die Flexibilität der Endmontage.

Es ist jedoch bei anderen Ausführungsbeispielen der Erfindung auch möglich, zum Anschluß des Balgens an die Öffnung eine Servoeinheit vorzusehen.

Weitere Ausführungsbeispiele der Erfindung zeichnen sich dadurch aus, daß in der Öffnung ein begrenzt höhenverschiebbares Rohr angeordnet ist.

Diese Maßnahme hat besondere Vorteile dann, wenn die Kraftfahrzeuge auf dem Montagerahmen aufgebockt sind, so daß die Räder sich etwas oberhalb der Oberfläche des Montagerahmens befinden. Gelangt ein derartiger Montagerahmen mit aufgebocktem Kraftfahrzeug in den Bereich eines Leistungsprüfstandes, wird der Montagerahmen abgesenkt und die Räder gelangen durch Öffnungen im Montagerahmen mit Rollen eines Rollenprüfstandes in Verbindung. In diesem Falle vergrößert sich durch das Absenken des Montagerahmens dessen Abstand zum Auspuff, während der Abstand des Auspuffs vom Saugschlitzkanal konstant bleibt. Diese Relativbewegung des Montagerahmens zu Auspuff und Saugschlitzkanal wird jedoch durch das höhenverschiebbare Rohr in der Öffnung kompensiert.

Bei Ausführungsbeispielen der Erfindung wird der Wagen über eine Stange, Hebel, Haken o.dgl. vom Montagerahmen mitgenommen.

Diese Maßnahme hat den Vorteil, daß durch die starre Verbindung von Wagen und Montagerahmen keine aufwendigen Maßnahmen im Bereich des Anschlusses des Balgens an die Öffnung vorgesehen werden müssen, weil sich die relative Lage dieser beiden Elemente zueinander nicht ändert.

Bevorzugt ist dabei, die Mitnahme mit einer Überlastkupplung zu versehen, die bei vorgegebener Abbremsung des Wagens diesen von dem Montagerahmen löst.

Diese Maßnahme hat den Vorteil, daß im Fall von Störungen, beispielsweise dann, wenn ein Wagen auf einen davorstehenden Wagen aufläuft, keine Beschädigung eintritt, weil sich der auflaufende und zum Stillstand gebremste Wagen von selbst vom Montagerahmen löst.

Es kann dabei bevorzugt am Wagen ein Hebel angeordnet sein, dessen eines Ende zur Mitnahme des Wagens in eine zugehörige Ausnehmung des Montagerahmens greift und dabei eine Schwenkbewegung ausführt, die das andere, mit dem Balgen verbundene Ende des Hebels zur Öffnung des Montagerahmens hin bewegt.

Diese Maßnahme zeichnet sich durch besondere Einfachheit aus, weil ohne Fremdkrafteinfluß die Mitnahme des Wagens und die Schließbewegung vom Balgen zur Öffnung hin vollführt wird.

Bei anderen bevorzugten Ausgestaltungen der Erfindung weist der Wagen Mittel zum Verfahren der Saugdüse in der Höhe zwischen einer unteren Wartestellung und einer oberen Koppelstellung auf.

Diese Maßnahme hat den Vorteil, daß die Kopplung zwischen Düse und gasführender Leitung des Montagerahmens ohne flexible Verbindungsmittel, beispielsweise einen Balg, erfolgen kann, so daß eine starre Mitnahmeverbindung zwischen Montagerahmen und Wagen entsteht.

Bei einer bevorzugten Weiterbildung dieser Variante sind die Mittel als Gelenkviereck ausgebildet, mit dem die Saugdüse motorisch unter Beibehaltung der axialen Richtung eines oberen aus der Saugdüse austretenden Gegenstutzens verschwenkbar ist.

Diese Maßnahme hat den besonderen Vorteil, daß allein durch die motorische Verschwenkung eine Ankopplung der Saugdüse an den Montagerahmen von schräg unter erfolgen kann, was den Bewegungsablauf zwischen dem sich axial bewegenden Montagerahmen und dem während des Ankoppelns zunächst feststehenden Wagen erleichtert, weil die Verschwenkbewegung des Wagens eine Komponente in Fahrtrichtung hat, anders, als dies bei einer radialen Annäherung mittels eines Balgens in senkrechter Richtung von unten der Fall wäre.

Bei einer Weiterbildung dieser Variante schließt der Gegenstutzen in der oberen Koppelstellung stumpf an einen aus der Öffnung des Montagerahmens austretenden Stutzen an.

Diese Maßnahme hat den Vorteil, daß ein «Einfädeln» von Rohren ineinander nicht erforderlich ist, so daß die Gefahr minimiert ist, daß der Stutzen den Gegenstutzen beim Annähern an die Koppelstellung verfehlt.

Besonders bevorzugt bei dieser Variante ist, wenn der Stutzen und der Gegenstutzen jeweils mit einem einen stirnseitigen Rand des Stutzens bzw. Gegenstutzens über deren halben Umfang überdeckenden halbzylindrischen Kragen versehen sind, die zusammen in der oberen Koppelstellung einen die stumpfe Stoßstelle zwischen dem Stutzen und dem Gegenstutzen umgebende Manschette bilden.

Diese Maßnahme hat zum einen den Vorteil, daß eine sehr gute Dichtwirkung erzielt wird, die für übliche Anwendungsfälle völlig ausreicht, weil im Inneren der Stutzen/Gegenstutzen bekanntlich ein Unterdruck herrscht, so daß ein Austreten von Abgasen zwischen Stutzen/Gegenstutzen und der Manschette praktisch ausgeschlossen ist. Ein weiterer wesentlicher Vorteil dieser Maßnahme liegt darin, daß der am Stutzen des Montagerahmens angeordnete halbzylindrische Kragen gleichzeitig eine mechanische Mitnahme für den Wagen bildet, weil der über die Stirnseite des Stutzens vorstehende Teil des Kragens den Gegenstutzen um dessen halben Umfang herum ergreift und mitschleppt.

Bei Ausführungsformen der Erfindung mit verschwenkbarer Saugdüse ist vorgesehen, daß der Wagen und der Montagerahmen mit aufeinander ansprechenden Näherungssensoren versehen sind, die über eine begrenzte Strecke in Fahrtrichtung des Montagerahmens bzw. des Wagens miteinander wechselwirken, derart, daß bei Annäherung des Montagerahmens an den Wagen kurz vor Erreichen einer Position, in der der Stutzen mit dem Gegenstutzen fluchtet, die Wechselwirkung beginnt und das Gelenkviereck mittels einer Steuerschaltung in die obere Koppelstellung verschwenkt wird, während die Wechselwirkung kurz hinter dieser Position wieder endet und das Gelenkviereck wieder in die untere Wartestellung zurückgeschwenkt wird.

Diese Maßnahme hat den Vorteil, daß eine besonders gute Synchronisation der Bewegungsabläufe erzielt wird. Dadurch, daß der axiale Wirkungsbereich, in Fahrtrichtung von Montagerahmen und Wagen gesehen, sich über eine bestimmte Strecke erstreckt, ist gewährleistet, daß die Steuerschaltung frühzeitig ein Signal zum Hochschwenken des Gelenkvierecks in die Koppelstellung erhält, so daß die obere Koppelstellung von der Saugdüse dann erreicht wird, wenn der Stutzen des Montagerahmens gerade mit dem Gegenstutzen des Wagens fluchtet. Sollte hingegen aufgrund einer Störung sich der Wagen wieder vom Montagerahmen lösen, so schwenkt das Gelenkviereck automatisch wieder nach unten und der Wagen geht in seine Ruhestellung zurück.

Diese Variante kann bevorzugt dadurch weitergebildet werden, daß die Steuerschaltung nach dem Zurückschwenken des Gelenkvierecks einen Antriebsmotor des Wagens zur Verfolgung des vorausfahrenden Montagerahmens einschaltet.

Die Maßnahme hat den Vorteil, daß dann, wenn der Montagerahmen versehentlich den Kontakt mit dem Wagen verliert und das Gelenkviereck in die Wartestellung zurückgeschwenkt wurde, durch Einschalten des Antriebsmotors dem Wagen eine höhere Geschwindigkeit als die des Montagerahmens verliehen werden kann, so daß der Wagen den Montagerahmen verfolgen kann, so lange bis die Näherungssensoren wieder miteinander wechselwirken und erneut ein Kontakt hergestellt werden kann. Gelingt die Verfolgung des Montagerahmens nicht, so kann der Wagen warten, bis der nächste freie Montagerahmen ankommt, an den der Wagen dann ankoppelt.

Entsprechendes gilt, wenn aufgrund einer Störung ein reguläres Ankoppeln eines Wagens an den Montagerahmen mißlingen sollte, weil dann der Wagen wieder aus dem Wechselwirkungsbereich der Näherungssensoren herausfällt und durch Verfolgung des Montagerahmens dann doch noch die Kopplung hergestellt werden kann.

Bei einer bevorzugten Ausgestaltung der zuletzt erläuterten Varianten sind die Näherungssensoren als Reflektor-Fotozelle am Wagen und als in Fahrtrichtung langgestreckter Reflektor am Montagerahmen ausgebildet.

Diese Maßnahme hat den Vorteil, daß besonders einfache und betriebssichere Elemente verwendet werden können und daß die Länge des Wirkungsbereichs leicht durch Dimensionierung der Länge des Reflektors eingestellt werden kann.

Weitere Vorteile ergeben sich aus der Beschreibung und der beigefügten Zeichnung.

Die Erfindung ist in der Zeichnung dargestellt und wird nachstehend anhand der Beschreibung näher erläutert. Es zeigen:

Fig. 1 eine schematische Gesamtansicht eines Montagerahmens mit einer erfindungsgemäßen Einrichtung, in einer axialen Ansicht;

Fig. 2 eine vereinfachte Darstellung in Richtung des Pfeiles II von Fig. 1;

Fig. 3 eine weiter vereinfachte Darstellung in Richtung des Pfeiles III von Fig. 2;

Fig. 4 eine Draufsicht auf ein Ende eines Montagerahmens;

Fig. 5 eine Seitenansicht eines Wagens bei einem anderen Ausführungsbeispiel der Erfindung mit dem Wagen in Wartestellung;

Fig. 6 eine Darstellung wie Fig. 5, jedoch in Koppelstellung des Wagens;

Fig. 7 einen Stromlaufplan einer Steuerschaltung, wie sie für die Ausführungsbeispiele gemäß den Fig. 5 und 6 Verwendung finden kann.

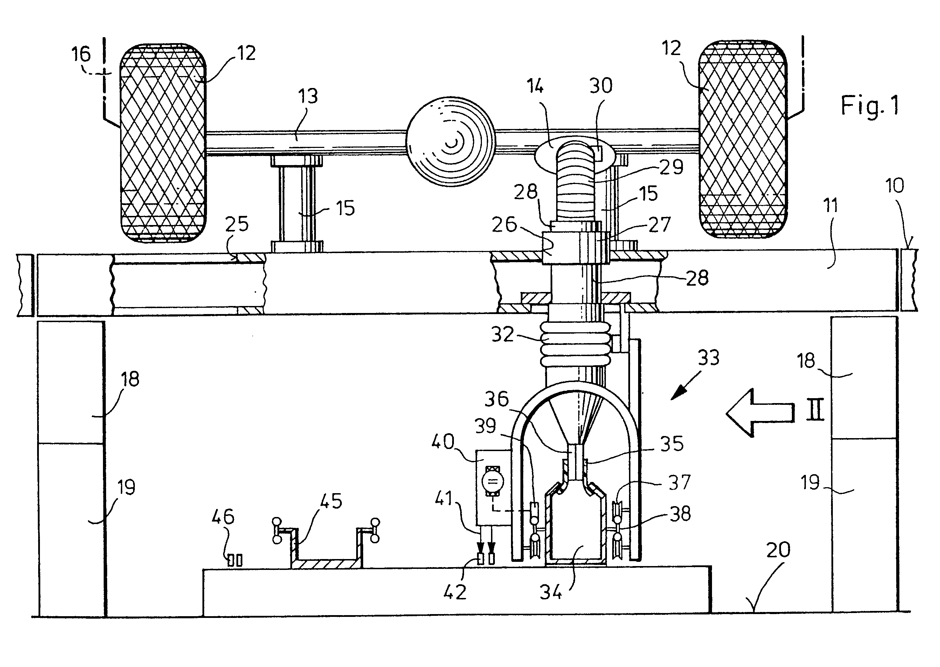

In Fig. 1 bezeichnet 10 einen Boden einer Montage- oder Betriebshalle. Bündig zu diesem Boden 10 sind Montagerahmen 11 vorgesehen, die in einer Ebene senkrecht zur Darstellung von Fig. 1 verfahrbar sind. Auf dem Montagerahmen 11 sind Räder 12, eine Hinterachse 13, ein Auspuff 14 sowie Stützen 15 zum Aufbocken eines Kraftfahrzeuges 16 zu erkennen.

Es versteht sich, daß statt eines Montagerahmens 11 auch eine sonstige Fördereinrichtung, beispielsweise ein Kettenförderer, ein Fließband o.dgl., vorgesehen sein kann.

Zum Bewegen der Montagerahmen 11 greifen an deren Längsseiten von unten Transporteinrichtungen 18 an, die auf Sockeln 19 stehen, die sich wiederum auf einem Unterboden 20 der Montage- oder Betriebshalle abstützen. Es versteht sich dabei, daß in einer solchen Montage- oder Betriebshalle auch mehrere Böden 10, 20 in mehrstöckiger Anordnung übereinander vorgesehen sein können.

Wie mit den Stützen 15 angedeutet, ist das Kraftfahrzeug 16 auf dem Montagerahmen 11 aufgebockt, so daß sich die Räder 12 etwas oberhalb der Oberfläche des Montagerahmens 11 befinden. Die Räder 12 stehen oberhalb von Öffnungen 25, durch die hindurch sie in einem Leistungsprüfstand mit Rollen eines Rollenprüfstandes in Verbindung gebracht werden können.

Im hinteren Randbereich des Montagerahmens 11 ist eine weitere Durchgangsöffnung 26 vorgesehen, in der ein Rohr 27 raumfest gehalten ist. Im Rohr 27 ist ein konzentrischer Stutzen 28 angeordnet, der begrenzt axial verschiebbar ist. An den Stutzen 28 ist oben ein Krümmer 29 angeschlossen, dessen anderes Ende mittels einer Zange 30 mit dem Auspuff 14 verbunden ist.

Von unten ist an den Stutzen 28 ein Balgen 32 eines Wagens 33 angeschlossen, der zusammen mit dem Montagerahmen 11 verfahrbar ist. Der Wagen 33 wird dabei axial entlang eines Saugschlitzkanals 34 bewegt, der eine axial durchgehende und nach oben weisende elastische Lippendichtung 35 aufweist. In der Lippendichtung 35 wird eine linsenförmige Saugdüse 36 dicht geführt.

Der Wagen 33 verfügt über Rollen 37, mit denen er auf Führungsprofilen 38 des Saugschlitzkanals 34 läuft.

Eine der Rollen 37 ist als Antriebsrolle 39 ausgebildet, die mit einem Antrieb 40, vorzugsweise einem Gleichstrommotor, zusammenarbeitet. Zur Versorgung des Antriebes 40 ist der Wagen 33 mit Stromabnehmern 41 versehen, die mit neben dem Saugschlitzkanal 34 verlaufenden Stromschienen 42 zusammenarbeiten.

Parallel zum Saugschlitzkanal 34 verläuft eine Rückführschiene 45, neben der sich ebenfalls Stromschienen 46 befinden.

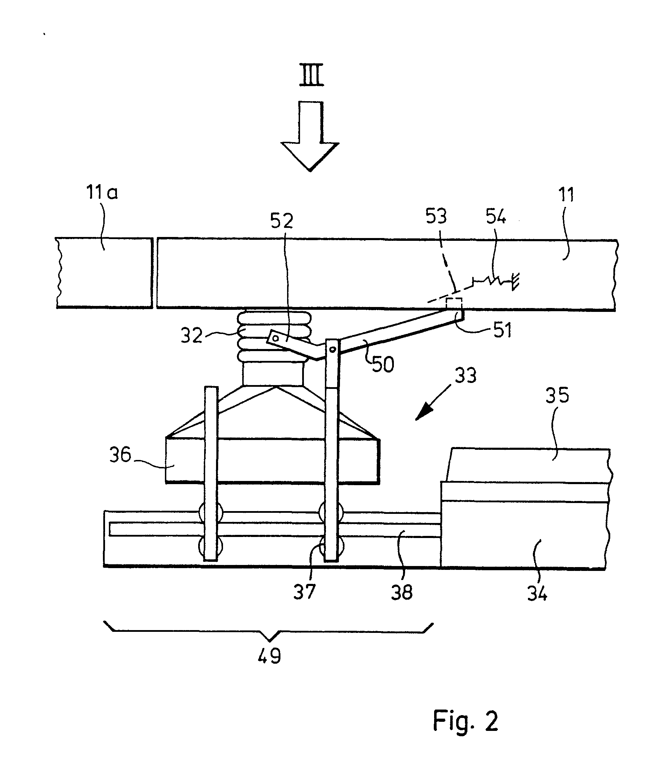

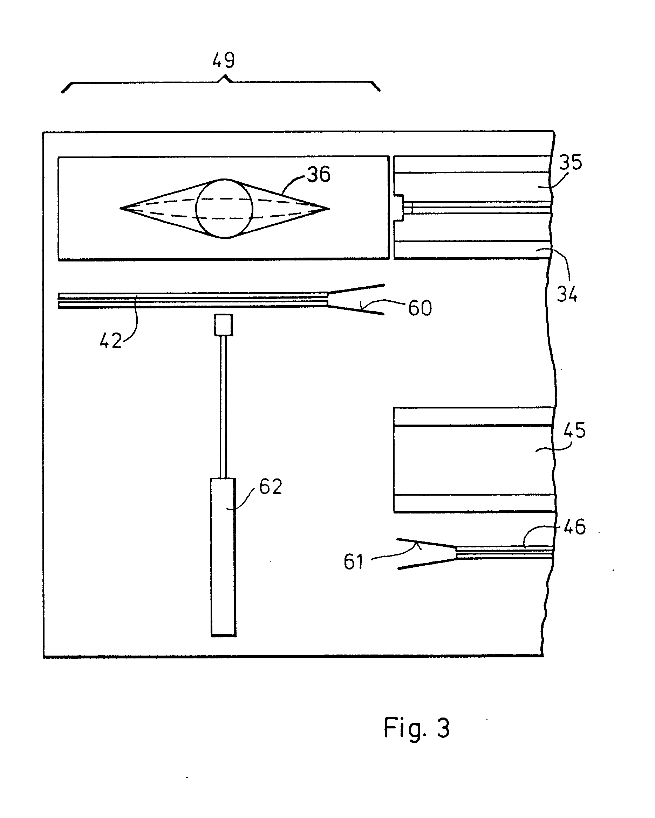

In der vereinfachten Darstellung von Fig. 2 erkennt man den Wagen 33 in einer Umsetzstation 49, die weiter unten zu Fig. 3 noch erläutert werden wird.

Am Rahmen des Wagens 33 ist bei dem in Fig. 2 dargestellten Ausführungsbeispiel ein zweiarmiger Hebel 50 angeordnet, dessen eines Ende 51 in eine in Fig. 2 nicht näher gezeichnete Ausnehmung des Montagerahmens 11 greift. Ein zweites Ende 52 des Hebels 50 ist mit dem Balgen 32 verbunden.

Im Montagerahmen 11 sind eine Schrägführung 53 und eine Feder 54 angedeutet.

Wenn ein Wagen 33 in Warteposition steht und sich ein Montagerahmen 11 nähert, befindet sich der Hebel 50 noch in einer Stellung, die gegenüber der in Fig. 2 gezeigten Stellung etwas im Gegenuhrzeigersinne verdreht ist. Das erste Ende 51 des Hebels 50 wird nun vom Montagerahmen 11 eingefangen und durch die Schrägführung 53 wird der Hebel 50 etwas im Uhrzeigersinne verdreht. Hierdurch wird das zweite Ende 52 nach oben verschwenkt und der Balgen 32 wird dicht an den Stutzen 28 gepreßt.

Durch die Feder 54 soll eine Überlastkupplung angedeutet werden, die bewirkt, daß bei zu starker Abbremsung des Wagens 33, beispielsweise dann, wenn er auf ein Hindernis läuft, sowohl das erste Ende 51 vom Montagerahmen 11 gelöst wird wie auch das zweite Ende 52 wieder nach unten schwenkt.

In Fig. 3, in der die Anordnung gemäß Fig. 2 von oben dargestellt ist, erkennt man, daß die Umsetzstation 49 mit einer Umsetzeinrichtung 62, beispielsweise einem Pneumatikförderer o.dgl. versehen ist.

Die auf der Rückführschiene 45 befindlichen Wagen können mittels ihres Antriebes 40 bis in den Bereich der Umsetzstation 49 vorfahren. Hier werden sie von der Umsetzeinrichtung 62 ergriffen und in eine Flucht mit dem Saugschlitzkanal 34 gebracht. In dieser Position werden sie, wie zu Fig. 2 erläutert, vom nächsten herankommenden Montagerahmen 11 ergriffen und mitgenommen. Am entgegengesetzten Ende des Saugschlitzkanals 34 löst sich der Wagen 33 durch geeignete Führungen o.dgl. vom Montagerahmen 11 und wird durch eine zweite Umsetzeinrichtung auf die Rückführschiene 45 gesetzt.

Um das Ein- und Ausfahren der Stromabnehmer 41 auf den Stromschienen 42, 46 zu vereinfachen, sind dort Einfahrtrichter 60, 61 vorgesehen.

Es versteht sich, daß statt des zweiarmigen Hebels 50 aus Fig. 2 zum Verfahren des Balgens 32 auch eine fremdkraftbetätigte Einrichtung, beispielsweise ein Pneumatikantrieb, ein Hubmagnet o.dgl., vorgesehen sein kann, wozu der Wagen 33 in der Mitnahmeposition Strom von den Stromschienen 42 beziehen kann.

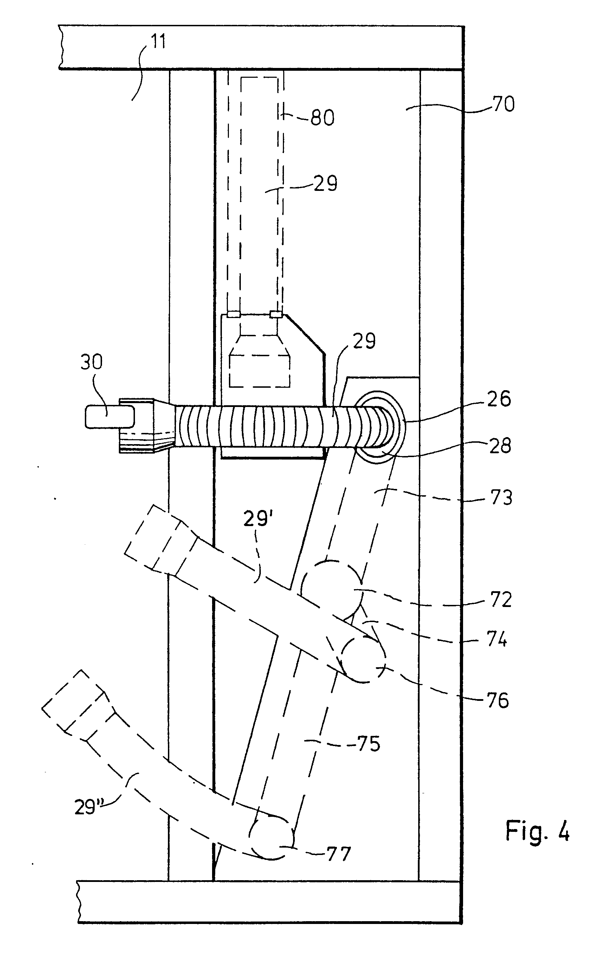

Fig. 4 zeigt eine Variante, bei der im Montagerahmen 11 ein verschliessbarer Hohlraum 80 zum Aufnehmen des Krümmers 29 angeordnet ist.

Der Montagerahmen 11 enthält somit alles Notwendige, um den Auspuff 14 des Kraftfahrzeuges 16 an die Öffnung 26 anzuschließen, so daß der Krümmer 29 bei Bedarf dem Hohlraum 80 entnommen und montiert werden kann, während die Demontage ebenso einfach möglich ist, wenn das Kraftfahrzeug 16 den Montagerahmen 11 verläßt. In diesem Falle kann dann der Krümmer 29 einfach in dem Hohlraum 80 verstaut werden, so daß er beim nächsten Montagespiel wieder für das nächste Kraftfahrzeug zur Verfügung steht.

Fig. 4 zeigt ferner, daß eine Öffnung 72 über eine Mehrzahl von Stichkanälen 73, 74, 75 mit einer Mehrzahl nur nach oben offener und mittels Deckel verschließbarer Öffnungen 26, 76, 77 verbunden sein kann, die über einen Abschnitt 70 des Montagerahmens verteilt angeordnet sind.

Es wird somit derselbe Montagerahmen 11 für unterschiedliche Kraftfahrzeugmodelle verwendet, bei denen sich der Auspuff 14 an unterschiedlicher Position befindet. Je nach gerade montiertem Modell kann dann der Auspuff 14 mit einer der Öffnungen 26, 76, 77 verbunden werden, während die übrigen Öffnungen durch die Deckel verschlossen bleiben.

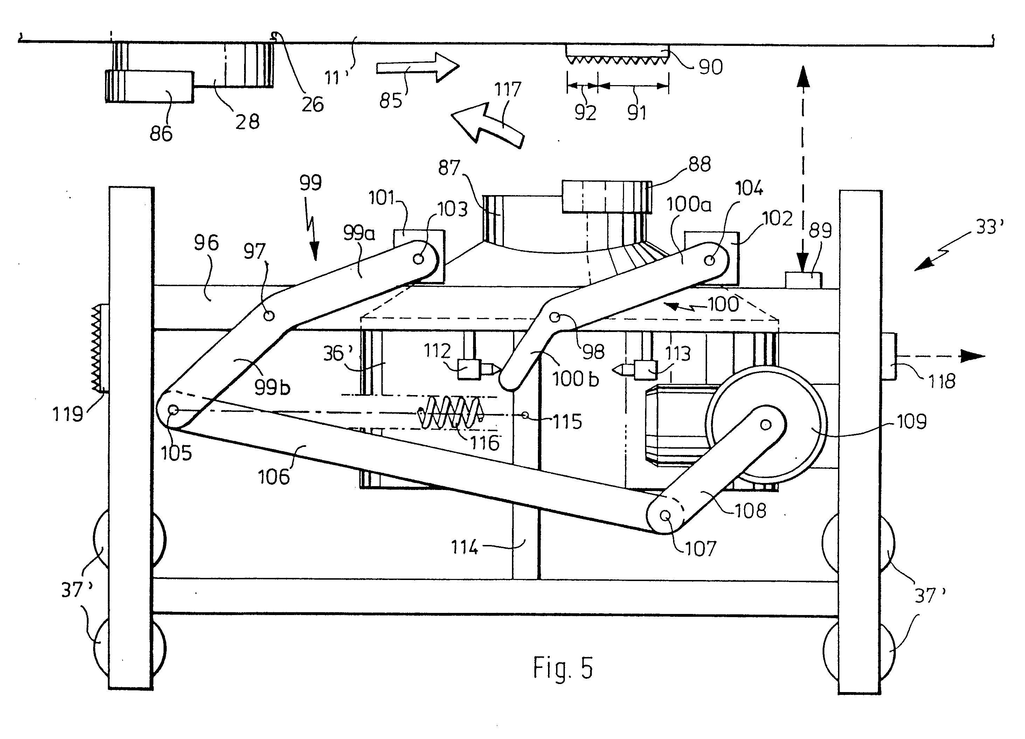

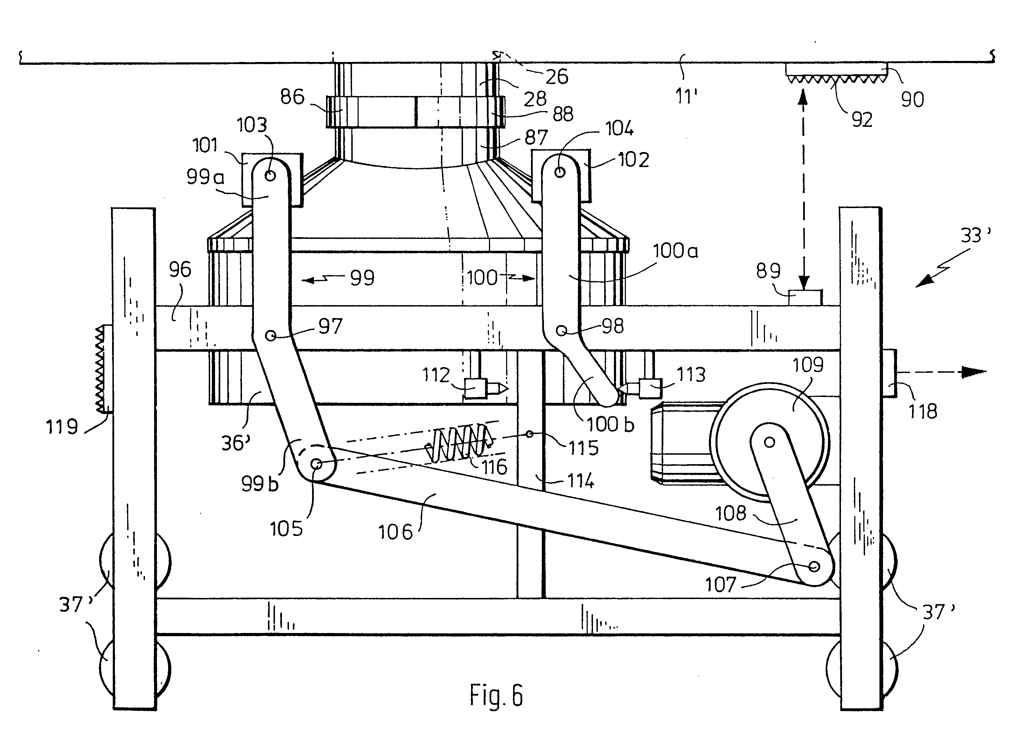

Während bei dem zuvor beschriebenen Auführungsbeispiel zum Ankoppeln der Saugdüse 36 an den Stutzen 28 im Montagerahmen 11 ein in der Höhe verstellbarer Balg 32 verwendet wurde, der bei in der Höhe feststehender Saugdüse 36 in senkrechter Richtung verschoben wurde, zeigen die Ausführungsbeispiele gemäss den Fig. 5 und 6 eine Variante hierzu, bei der entsprechende Bezugzeichen jeweils mit einem Apostroph versehen sind.

In der oberen Hälfte der Fig. 5 und 6 ist ausschnittsweise der Montagerahmen 11' zu erkennen, der sich oberhalb des Wagens 33' in Richtung eines Pfeiles 85 bewegt.

Unten an den Stutzen 28 des Montagerahmens 11' ist ein halbzylindrischer Kragen 86 angesetzt, der über die untere Stirnseite des Stutzens 28 vorsteht und sich halbkreisförmig in Fahrtrichtung, d.h. in Richtung des Pfeiles 85 öffnet.

Am Wagen 33' ist ein entsprechender Gegenstutzen 87 vorgesehen, der ebenfalls mit einem halbzylindrischen Kragen 88 versehen ist, der sich in entgegengesetzter Richtung zum halbzylindrischen Kragen 86 öffnet.

Am Wagen 33' ist ferner eine erste Reflektor-Fotozelle 89 vorgesehen, die mit einem Reflektor 90 an der Unterseite des Montagerahmens 11' in Wechselwirkung treten kann. Der Reflektor 90 weist einen vorderen Abschnitt 91 und einen hinteren Abschnitt 92, in Fahrtrichtung (Pfeil 85) des Montagerahmens 11' gesehen, auf.

An einer sich in Fahrtrichtung erstreckenden Traverse 96 des Wagens 33' befinden sich im axialen Abstand zwei Gelenke 97, 98 für zweiarmige Hebel 99, 100. Die oberen Arme 99a, 100a der Hebel 99, 100 sind an Flanschen 101, 102 der Saugdüse 36' mittels Gelenken 103, 104 angelenkt. Die oberen Arme 99a, 100a bilden daher zusammen mit der Saugdüse 36' und der Traverse 96 ein Gelenkviereck mit den Gelenken 97, 98, 103, 104.

Zum Betätigen dieses Gelenkvierecks ist am unteren Ende des unteren Armes 99b des Hebels 99 mittels eines Gelenks 105 eine Schwinge 106 befestigt, die an ihrem anderen Ende mittels eines Gelenks 107 an einer Kurbel 108 befestigt ist, die mittels eines Kopplungsmotors 109 in einer zum Gelenkviereck parallelen Ebene verdrehbar ist. Der Kopplungsmotor 109 ist am Wagen 33' befestigt.

Der untere Arm 100b des Hebels 100 steht mit zwei Endschaltern 112, 113 in Wirkverbindung.

An einer weiteren Traverse 114 des Wagens 33' ist in einem Gelenk 115 eine Schraubenfeder 116 befestigt, deren entgegengesetztes Ende am Gelenk 105 am unteren Ende des unteren Armes 99b des Hebels 99 angreift.

Durch die vorstehend beschriebenen Elemente ist es möglich, das Gelenkviereck mit der Saugdüse 36' unter Entspannen der Schraubenfeder 116 aus der in Fig. 5 dargestellten Wartestellung in Richtung eines in Fig. 5 eingezeichneten Pfeiles 117 in die in Fig. 6 dargestellte Koppelstellung zu bringen, wie dies weiter unten noch beschrieben werden wird.

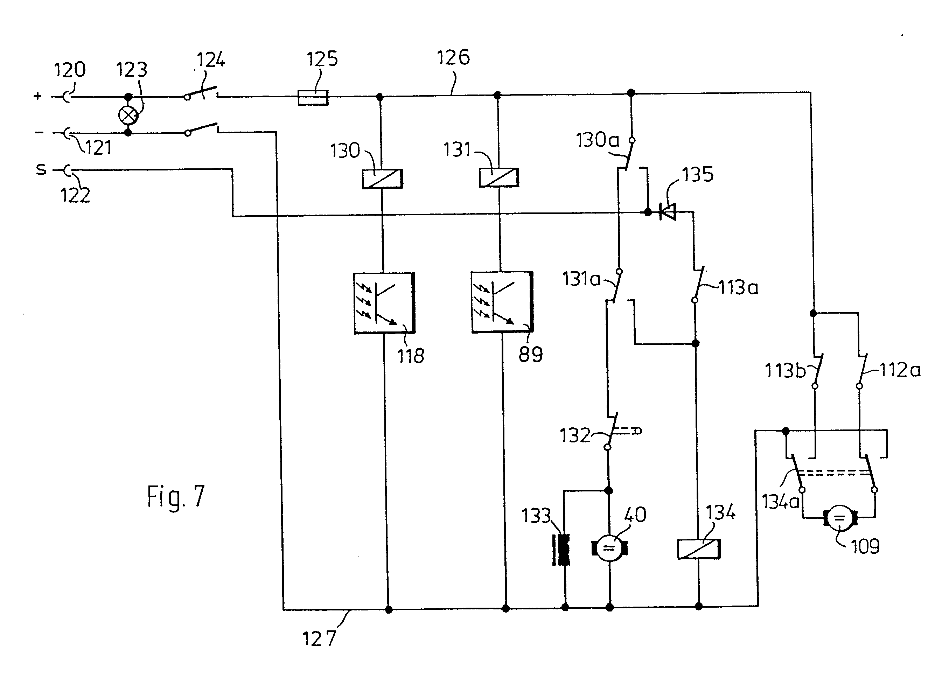

Zur Steuerung der verschiedenen Antriebs- und Verstellelemente des Wagens 33' kann eine Steuerschaltung verwendet werden, wie sie beispielhaft mit einem Stromlaufplan in Fig. 7 gezeigt ist.

Bei der Schaltung gemäß Fig. 7 sind mit einem Plusanschluß 120, einem Minusanschluß 121 und einem Singalanschluß 122 drei stromführende Schienen angedeutet, mit denen der Wagen 33' über geeignete Stromabnehmer bzw. -schleifer in Verbindung steht. Zwischen die stromführenden Anschlüsse 120, 121 ist eine Betriebsleuchte 123 geschaltet und mittels eines Hauptschalters 124 können die stromführenden Anschlüsse 120, 121 über eine Automatensicherung 125 an eine Plusleitung 126 bzw. eine Minusleitung 127 der Steuerschaltung gelegt werden.

Zwischen den Leitungen 126, 127 liegt zunächst eine Reihenschaltung einer ersten Relaisspule 130 und der zweiten Reflektor-Fotozelle 118. In gleicher Weise ist zwischen die Leitungen 126, 127 eine Reihenschaltung einer zweiten Relaisspule 131 und der ersten Reflektor-Fotozelle 89 geschaltet. Von der Plusleitung 126 führt ferner eine Reihenschaltung eines von der ersten Relaisspule 130 betätigen Umschalters 130a und eines von der zweiten Relaisspule 131 betätigten Umschalters 131a über einen Wartepositionsschalter 132 zu einer Parallelschaltung des Antriebsmotors 40 des Wagens 33' und eines Betätigungsmagneten 133 für die Antriebsrolle 39, wie sie insoweit übereinstimmend mit dem Ausführungsbeispiel der Fig. 5 und 6 in Fig. 1 gezeigt sind. Der Antriebsmotor 40 und der Betätigungsmagnet 133 sind an ihrem anderen Ende mit der Minusleitung 127 verbunden. Der andere Kontakt des Umschalters 130a führt zum Signalanschluß 122 sowie zur Kathode einer Diode 135, deren Anode über einen Schaltkontakt 113a des Endschalters 113 zum anderen Kontakt des Umschalters 131a sowie über eine dritte Relaisspule 134 zur Minusleitung 127 führt. Schließlich sind an die Plusleitung 126 noch ein zweiter Schaltkontakt 113b des Endschalters 113 sowie ein Schaltkontakt 112a des Endschalters 112 angeschlossen, die zu Kontakten eines zweipoligen Umschalters 134a, der von der dritten Relaisspule 134 betätigt wird führen, an dessen andere Schaltkontakte der Kopplungsmotor 109 angeschlossen ist.

Die Wirkungsweise des Wages 33' gemäß den Fig. 5 und 6, wie er mittels der Steuerschaltung gemäß Fig. 7 betätigt wird, ist wie folgt:

Fig. 5 zeigt die Wartestellung des Wagens 33'. Das Gelenkviereck 36', 96, 99a, 100a befindet sich in der unteren Stellung, in der der untere Arm 100b des Hebels 100 den unteren Endschalter 112 betätigt. Die erste Reflektor-Fotozelle 89 hat keine Verbindung zum Reflektor 90. Dies bedeutet, daß bei geschlossenem Hauptschalter 124 die Stecke über die erste Reflektor-Fotozelle 89 sperrt und die zweite Relaisspule 131 nicht erregt ist.

Die zweite Reflektor-Fotozelle 118 mit zugehörigem Reflektor 119 an der Rückseite des vorausfahrenden Wagens dient dazu, um ein dichtes Aufeinanderfahren der Wagen 33' mit minimalem Restabstand zu ermöglichen wie dies im einzelnen in der älteren Patentanmeldung DE-A-34 33 602 derselben Anmelder beschrieben ist, die auch im einzelnen die Steuerung des Antriebsmotors, dessen Anordnung und dergleichen erläutert. Der Offenbarungsgehalt jener Patentanmeldung wird durch diese Bezugnahme zum Offenbarungsgehalt der vorliegenden Anmeldung gemacht.

Unter der Voraussetzung, daß kein weiterer Wagen dicht vor dem Wagen 33' steht, spricht die zweite Reflektor-Fotozelle 118 nicht an und dadurch ist auch die erste Relaisspule 130 nicht erregt.

Befindet sich der Wagen 33' in einer Abholposition der erfindungsgemäßen Einrichtung, so wird durch einen in der Figur nicht dargestellten raumfesten Betätigungsnocken oder dergleichen der am Wagen 33' angebrachte, in der Figur ebenfalls nicht dargestellte Wartepositionsschalter 132 betätigt, so daß der entsprechende Schaltkontakt in Fig. 7 geöffnet ist und daher weder der Antriebsmotor 40 noch der Betätigungsmagnet 133 erregt sind.

Wenn sich nun, wie Fig. 5 zeigt, ein Montagerahmen 11' in Richtung des Pfeiles 85 nähert, gelangt in einer ersten Phase der vordere Abschnitt 91' des Reflektors 90 in eine Position oberhalb der ersten Reflektor-Fotozelle 89, in der der Stutzen 28 jedoch noch nicht mit dem Gegenstutzen 87 fluchtet. Durch die Wechselwirkung zwischen erster Reflektor-Fotozelle 89 und Reflektor 90 wird nun jedoch die zweite Relaisspule 131 erregt und der Umschalter 131a umgelegt. Hierdurch erhält nun die dritte Relaisspule 134 über den immer noch geschlossenen Umschaltkontakt 130a Strom und legt den zweipoligen Umschaltkontakt 134a in die in Fig. 7 nicht eingezeichnete Stellung. Da bislang, wie bereits erwähnt, der Wagen 33' sich in der in Fig. 5 eingezeichneten Wartestellung befand, war der untere Endschalter 112 betätigt und dessen zugehöriger Schaltkontakt 112a geöffnet. Aufgrund dessen war auch der Koppelmotor 109 stromlos.

Durch das Umschalten des zweipoligen Umschaltkontaktes 134a erhält nun der Koppelmotor 109 jedoch Strom über den noch geschlossenen Schaltkontakt 113b des oberen Endschalters 113, so daß sich die Kurbel 108 dreht und über die Schwinge 106 des Gelenkviereck 36', 96, 99a, 100a in Richtung des Pfeiles 117 von Fig. 5 verschwenkt.

Unter Berücksichtigung der Verfahrgeschwindigkeit des Montagerahmens 11 sind die Winkelgeschwindigkeit des Koppelmotors 109 sowie die Abmessungen der verschiedenen Gelenkelemente so ausgelegt, daß der Gegenstutzen 87 der Saugdüse 36′ gerade dann in eine mit dem Stutzen 28 des Montagerahmens 11 fluchtende Stellung gelangt, wenn die erste Reflektor-Fotozelle 89 sich gerade unterhalb des hinteren Abschnittes 92 des Reflektors 90 befindet. Diese obere Koppelstellung ist in Fig. 6 gezeigt. Bei Erreichen dieser Koppelstellung betätigt der untere Arm 100b des Hebels 100a den oberen Endschalter 113, so daß der Scahltkontakt 113b geöffnet wird. Der Schaltkontakt 112a des unteren Endschalters 112 hatte sich in dem Augenblick geschlossen, als der untere Arm 100b vom unteren Endschalter 112 abhob.

Durch das Öffnen des Schaltkontakts 113b wird der Koppelmotor 109 stromlos und bleibt in der Koppelstellung gemäß Fig. 6 stehen. Da die erste Reflektor-Fotozelle 89 sich immer noch in Wechselwirkung mit dem Reflektor 90 befindet, bleibt die zweite Relaisspule 131 erregt, so daß auch die dritte Relaisspule 134 erregt bleibt und den zweipoligen Umschaltkontakt 134a in der in Fig. 7 nicht eingezeichneten Stellung hält.

Während des Hochfahrens der Saugdüse 36′ war der Schaltkontakt 113a des oberen Endschalters 113 geschlossen und es konnte kurzzeitig über den Schaltkontakt 130a und den umgelegten Schaltkontakt 131a positive Spannung über die Diode 135 zum Signalanschluß 122 gelangen. Bei Erreichen der oberen Koppelstellung gemäß Fig. 6 und Betätigung des oberen Endschalters 113 wurde jedoch der Schaltkontakt 113a wieder geöffnet, so daß das positive Signal am Signalanschluß 122 wieder verschwand. Dieser für die Zeit des Hochfahrens der Saugdüse 36′ auftretende Spannungsimpuls kann daher herangezogen werden, um eine Fehlfunktion der Anordnung zu erkennen, weil beispielsweise dann, wenn die Saugdüse 36′ aufgrund einer mechanischen Störung auf halben Wege zwischen Wartestellung und Koppelstellung stehen bleibt, am Signalanschluß 122 ein Dauersignal ansteht, das von dem bei ordnungsgemäßem Betrieb auftretenden kurzzeitigen Spannungsimpuls mit geeigneten Zeitsteuerschaltungen unterschieden werden kann.

Aus der in Fig. 6 gezeigten Koppelstellung nimmt nun der Montagerahmen 11′ den Wagen 33′ mit, weil der halbzylindrische Kragen 86 des Stutzens 28 an der Rückseite (in Fahrtrichtung gesehen) des Gegenstutzens 87 um diesen greift und daher den Wagen 33′ insgesamt formschlüssig mitnimmt.

Diese Mitnahme erfolgt gegen die Kraft der Schraubenfeder 116, die bei einem Herabschwenken der Saugdüse 36 gespannt werden musste.

Auf diese Weise kann der Montagerahmen 11′ den Wagen 33′ über beliebige Entfernungen mitschleppen, solange die erste Reflektor-Fotozelle 89 in Wechselwirkung mit dem Reflektor 90 verbleibt. In diesem Falle bleiben auch Antriebsmotor 40 und Betätigungsmagnet 133 abgeschaltet, so daß der Wagen 33′ nicht durch einen elektrisch zugeschalteten und/oder mechanisch angekoppelten Antrieb gebremst wird.

Im Falle einer Störung kann nun der Fall eintreten, daß sich der Montagerahmen 11′ während der Fahrt von Wagen 33′ löst, der dann mangels formschlüssiger Mitnahme durch den Kragen 86 hinter dem Montagerahmen 11 zurückbleibt. In diesem Falle verliert die erste Reflektor-Fotozelle 89 den Kontakt zum Reflektor 90. Dies bedeutet, daß die zweite Relaisspule 131 entregt wird und der Umschaltkontakt 131a wieder in die in Fig. 7 eingezeichnete Stellung zurückschaltet.

Dies bewirkt zum einen, daß die dritte Relaisspule 134 entregt wird, wodurch der zweipolige Umschaltkontakt 134 wieder in die in Fig. 7 eingezeichnete Stellung zurückschaltet und wegen des geschlossenen Schaltkontakts 112a des unteren Endschalters 112 der Koppelmotor 109 in entgegengesetzter Drehrichtung betrieben wird und die Saugdüse 36′ wieder nach unten in die Wartestellung gemäß Fig. 5 zurückschwenkt, wobei gleichzeitig die Schraubenfeder 116 gespannt wird.

Infolge des Zurückschaltens des Umschaltkontakts 131a erhalten nun jedoch auch der Antriebsmotor 40 und der Betätigungsmagnet 133 Strom, so daß der Antriebsmotor 40 eingeschaltet und durch mechanische Kopplung der Antriebsrolle 39 an das Führungsprofil 38 sich der Wagen 33′ in Fahrt setzt. Die Antriebsgeschwindigkeit des Wagens 33′ ist nun so eingestellt, daß sie größer ist als die Verfahrgeschwindigkeit des Montagerahmens 11′. Dies bedeutet, daß der Antriebswagen 33′ die Verfolgung des Montagerahmens 11′ aufnimmt, bis wiederum eine Wechselwirkung zwischen der ersten Reflektor-Fotozelle 89 und dem Reflektor 90 hergestellt wurde. In diesem Falle wiederholt sich das oben beschriebene Spiel, der Antrieb des Wagens 33′ wird mechanisch und elektrisch abgeschaltet und ein neues Koppelmanöver wird eingeleitet.

Mißlingt auch die Verfolgung des Montagerahmens 11′, so kann der Wagen 33′ auf den nächsten ankommenden Montagerahmen 11′ warten und an diesen ankoppeln.

Entsprechendes gilt selbstverständlich für den Fall, daß das Ankoppelmanöver bereits in der Warteposition mißlungen ist.

Wenn der Wagen 33′ auf einen vor ihm fahrenden Wagen auffährt, so schaltet die zweite Reflektor-Fotozelle 118 durch, die erste Relaisspule 130 wird erregt und der Schaltkontakt 130a dieser Spule wird aus der in Fig. 7 gezeichneten Stellung umgelegt. Damit erscheint einmal ein Signal am Signalanschluß S und zum anderen werden sowohl der Antriebsmotor 40 wie auch der Betätigungsmagnet 133 sowie die dritte Relaisspule 134 stromlos geschaltet, so daß der Wagen 33′ vollkommen außer Betrieb gesetzt wird, bis sich der vorausfahrende Wagen wieder entfernt hat.

**Patentansprüche**

1. Einrichtung zum Absaugen und Sammeln von Gasen, insbesondere von Kraftfahrzeug-Auspuffgasen, in einer Montage- oder Betriebshalle, mit einem raumfesten Saugschlitzkanal (34), der an einer Seite mit einer elastischen, axial verlaufenden Lippendichtung (35) versehen ist, in der eine Saugdüse (36) mindestens eines axial entlang von Führungsprofilen (38) bewegbaren Wagens (33) dicht geführt ist, wobei an die Saugdüse (36) eine gasführende Leitung angeschlossen ist und in dem Saugschlitzkanal (34) über ein Sauggebläse ein Unterdruck erzeugt wird, dadurch gekennzeichnet, daß der Saugschlitzkanal (34) unterhalb von axial bewegbaren Montagerahmen (11) angeordnet ist und die Wagen (33) mit diesen synchron bewegbar sind, daß die Lippendichtung (35) mit ihren Lippen nach oben weist und daß die Leitung von unten an eine Öffnung (26) im Montagerahmen (11) ansetzbar ist.

2. Einrichtung nach Anspruch 1, dadurch gekennzeichnet, daß auf dem Montagerahmen (11) ein Kraftfahrzeug (19) angeordnet ist und daß der Auspuff (14) des Kraftfahrzeuges mit der Öffnung (26) verbunden ist.

3. Einrichtung nach Anspruch 2, dadurch gekennzeichnet, daß ein abnehmbarer Krümmer (29) den Auspuff (14) mit der Öffnung (26) verbindet.

4. Einrichtung nach Anspruch 3, dadurch gekennzeichnet, daß im Montagerahmen (11) ein verschließbarer Hohlraum (80) zur Aufnahme des Krümmers (29) angeordnet ist.

5. Einrichtung nach einem der Ansprüche 1 bis 4, dadurch gekennzeichnet, daß die Öffnung (27) über eine Mehrzahl von Stichkanälen (73 bis 75) mit einer Mehrzahl nur nach oben offener und mittels Deckeln verschließbarer Öffnungen verbunden ist, die über einen Abschnitt (70) des Montagerahmens (11) verteilt angeordnet sind.

6. Einrichtung nach einem der Ansprüche 1 bis 5, dadurch gekennzeichnet, daß zum Anschluß der Leitung an die Öffnung (26) eine Servoeinheit vorgesehen ist.

7. Einrichtung nach einem der Ansprüche 1 bis 6, dadurch gekennzeichnet, daß in der Öffnung (26) ein begrenzt höhenverschiebbares Rohr (28) angeordnet ist.

8. Einrichtung nach einem der Ansprüche 1 bis 7, dadurch gekennzeichnet, daß der Wagen (33) über eine Stange, Hebel (50), Haken o.dgl. vom Montagerahmen (11) mitgenommen wird.

9. Einrichtung nach Anspruch 8, dadurch gekennzeichnet, daß die Mitnahme mit einer Überlastkupplung (53, 54) versehen ist, die bei vorgegebener Abbremsung des Wagens (33) diesen von dem Montagerahmen (11) löst.

10. Einrichtung nach Anspruch 8 oder 9, dadurch gekennzeichnet, daß am Wagen (33) ein Hebel (50) angeordnet ist, dessen eines Ende (51) zur Mitnahme des Wagens (33) in eine zugehörige Ausnehmung des Montagerahmens (11) greift und dabei eine Schwenkbewegung ausführt, die das andere, mit dem Balgen (32) verbundene Ende (52) des Hebels (50) zur Öffnung (26) des Montagerahmens (11) hin bewegt.

11. Einrichtung nach einem der Ansprüche 1 bis 7, dadurch gekennzeichnet, daß der Wagen (33') Mittel zum Verfahren der Saugdüse (36) in der Höhe zwischen einer unteren Wartestellung und einer oberen Koppelstellung aufweist.

12. Einrichtung nach Anspruch 11, dadurch gekennzeichnet, daß die Mittel als Gelenkviereck (36', 96, 99a, 100a) ausgebildet sind, mit dem die Saugdüse (36) motorisch unter Beibehaltung der axialen Richtung eines oben aus der Saugdüse (36) austretenden Gegenstutzens (87) verschwenkbar ist.

13. Einrichtung nach Anspruch 12, dadurch gekennzeichnet, daß der Gegenstutzen (87) in der oberen Koppelstellung stumpf an einen aus der Öffnung (26) des Montagerahmen (11) austretenden Stutzen (28) anschließt.

14. Einrichtung nach Anspruch 13, dadurch gekennzeichnet, daß der Stutzen (28) und der Gegenstutzen (87) jeweils mit einem einen stirnseitigen Rand des Stutzens (28) bzw. Gegenstutzens (87) über deren halben Umfang überdeckenden halbzylindrischen Kragen (86, 88) versehen sind, die zusammen in der oberen Koppelstellung eine die stumpfe Stoßstelle zwischen dem Stutzen (28) und dem Gegenstutzen (87) umgebende Manschette bilden.

15. Einrichtung nach einem der Ansprüche 12 bis 14, dadurch gekennzeichnet, daß der Wagen (33') und der Montagerahmen (11) mit aufeinander ansprechenden Näherungssensoren versehen sind, die über eine begrenzte Strecke in Fahrtrichtung des Montagerahmens (11) bzw. des Wagens (33') miteinander wechselwirken, derart, daß bei Annäherung des Montagerahmens (11') an den Wagen (33') kurz vor Erreichen einer Position, in der der Stutzen (28) mit dem Gegenstutzen (87) fluchtet, die Wechselwirkung beginnt und das Gelenkviereck (36', 96, 99a, 100a) mittels einer Steuerschaltung in die obere Koppelstellung verschwenkt wird, während die Wechselwirkung kurz hinter dieser Position wieder endet und das Gelenkviereck (36', 96, 99a, 100a) wieder in die untere Wartestellung zurückgeschwenkt wird.

16. Einrichtung nach Anspruch 15, dadurch gekennzeichnet, daß die Steuerschaltung nach dem Zurückschwenken des Gelenkvierecks (36', 96, 99a, 100a) einen Antriebsmotor (40) des Wagens (33') zur Verfolgung des vorausfahrenden Montagerahmens (11') einschaltet.

17. Einrichtung nach Anspruch 15 oder 16, dadurch gekennzeichnet, daß die Näherungssensoren als Reflektor-Fotozelle (89) am Wagen (33') und als in Fahrtrichtung langgestreckter Reflektor (90) am Montagerahmen 11 ausgebildet sind.

## Claims

1. An apparatus for exhausting and collecting gases, in particular motor vehicle exhaust gases in an assembly or factory hall, comprising a slotted exhaust conduit (34) fixed in position and provided on one face with an elastic, axial lip seal (35) for guiding in sealed relationship a suction nozzle (36) of at least one carriage (33) which can be moved in the axial direction along guide sections (38), the suction nozzle (36) being connected to a gas line and a vacuum being generated in the slotted exhaust conduit (34) through an exhauster, characterized in that the slotted exhaust conduit (34) is provided below axially movable assembly frames (11) and the carriages (33) can be moved in synchronism with the latter, the lips of the lip seal (35) being directed upwardly and the line being adapted for being attached to an opening (26) in the assembly frame (11) from below.

2. The apparatus of claim 1, characterized in that a motor vehicle (19) is arranged on the assembly frame (11), and exhaust (14) of the motor vehicle being connected with the opening (26).

3. The apparatus of claim 2, characterized in that the exhauts (14) is connected with the opening (26) via a detachable elbow (29).

4. The apparatus of claim 3, characterized in that a cavity (80) being adapted to be closed, is provided in the assembly frame (11) for receiving the below (29).

5. The apparatus of any of claims 1 through 4, characterized in that the opening (27) is connected via a plurality of junction conduits (73 through 75) with a plurality of openings being distributed over a section of the assembly frame (11) and being open only at their top and adapted for being closed by means of covers.

6. The apparatus of any of claims 1 through 5, characterized in that a servo mechanism is used for connecting the line with said opening (27).

7. The apparatus of any of claims 1 through 6, characterized in that a pipe (28) adapted for being vertically displaced within certain limits is provided in the opening (27).

8. The apparatus of any of claims 1 through 7, characterized in that the carriage (33) is entrained by the assembly frame (11) via a rod, lever (50), hook, or the like.

9. The apparatus of claim 8, characterized in that the entraining means are provided with an overload coupling (53, 54) detaching the carriage (33) from the assembly frame (11) when the carriage (33) is braked to a predetermined degree.

10. The apparatus of any of claims 8 or 9, characterized in that the carriage (33) is provided with a lever (50) engaging a matching recess in the assembly frame (11) by its one end (51) for entraining the carriage (33) and which, when doing so, performs a pivoting movement by which the other end (52) of the lever (50) being connected with the bellows (32) is moved towards the opening (27) of the assembly frame (11).

11. The apparatus of any of claims 1 through 7, characterized in that the carriage (33') comprises means for displacing the suction puzzle (36) vertically between a lower waiting position and an upper coupling position.

12. The apparatus of claims 11, characterized in that the means are designed as a four-bar linkage (36', 96, 99a, 100a), by means of which the suction puzzle (36) can perform a motor-driven pivoting movement while the axial direction of a counter-pipe (87) projecting from the top of the suction puzzle (36) remains unchanged.

13. The apparatus of claim 12, characterized in that the counter-pipe (87) abuts in the upper coupling position flush against a pipe (28) projecting from the opening (26) of the assembly frame (11).

14. The apparatus of claim 13, characterized in that the pipe (28) and the counter-pipe (87) are each provided with a semi-cylindrical collar (86, 88) forming a rim about half of the periphery of the pipe (28) and the counter-pipe (87) respectively, and forming together in the upper coupling position a cylindrical sleeve embracing the butt joint between the pipe (28) and the counter-pipe (87).

15. The apparatus of any of claims 12 through 14, characterized in that the carriage (33') and the assembly frame (11) are equipped with approximation sensors responding to each other and interacting with each other over a limited distance in the travelling direction of the assembly frame (1) and/or the carriage (33') such that when the assembly frame (11') approaches the carriage (33'), the interaction commences a short distance before the position is reached where the pipe (28) is in alignment with the counter-pipe (87), and causes the four-bar linkage (36', 96, 96a, 100a) to move into its upper coupling position by means of a control circuit, whereas the interaction ends again a short way behind this position so that the four-bar linkage (36', 96, 99a, 100a) is then returned to its lower waiting position.

16. The apparatus of claim 15, characterized in that the control circuit, when the four-bar linkage (36', 96, 99a, 100a) has moved back to its lower position, switches on a drive motor (40) of the carriage (33') for hunting the disengaged assembly frame (11').

17. The apparatus of any of claims 15 or 16, characterized in that the approximation sensors are designed as a reflecting photoelectric cell (89) on the carriage (33') and as an elongated reflector (90) on the assembly frame (11), extending in the travelling direction.

## Revendications

1. Dispositif pour l'aspiration et le rassemblement de gaz, en particulier de gaz d'échappement de véhicules automobiles dans un hall de montage et d'exploitation, avec un canal fixe d'aspiration à fente (34), qui est muni d'un côté d'un joint à lèvres (35) élastique axial, dans lequel est introduit de manière étanche une buse d'aspiration (36) d'au moins un chariot (33) mobile axialement le long de profilés de guidage (38), dispositif dans lequel une conduite à gaz est reliée à la buse d'aspiration (36) et une dépression est produite dans le canal d'aspiration à fente (34) par un ventilateur extracteur, caractérisé en ce que le canal d'aspiration à fente (34) est disposé au-dessous de cadres de montage (11) mobiles axialement et les chariots (33) sont mobiles synchrones avec eux, en ce que le joint à lèvres (35) présente ses lèvres vers le haut et en ce que la conduite est ajoutable par en dessous à un orifice (26) dans le cadre de montage (11).

2. Dispositif selon la revendication 1, caracterisé en ce que sur le cadre de montage (11), est disposé un véhicule automobile (19) et que l'échappement (14) du véhicule automobile est relié à l'orifice (26).

3. Dispositif selon la revendication 2, caracterisé en ce qu'un raccord coudé amovible (29) relie l'échappement (14) à l'orifice (26).

4. Dispositif selon la revendication 3, caracterisé en ce que, dans le cadre de montage (11), est disposé une cavité obturable pour recevoir le raccord coudé (29).

5. Dispositif selon l'une des revendications 1 à 4, caracterisé en ce que l'orifice (26) est relié par une pluralité de canaux secondaires (73 à 75) avec une pluralité d'orifices ouverts seulement vers le haut et obturables à l'aide de couvercles, et que les orifices sont répartis à une section (70) du cadre de montage (11).

6. Dispositif selon l'une des revendications 1 à 6, caracterisé en ce qu'un servo-système est prévu pour la jonction de la conduite à l'orifice (26).

7. Dispositif selon l'une des revendications 1 à 6, caracterisé en ce que dans l'orifice (26) est disposé un tube (28) à déplacement limité vertical.

8. Dispositif selon l'une des revendications 1 à 7, caracterisé en ce que le chariot (33) est entraîné par le cadre de montage (11) par l'intermédiaire d'une type, d'un levier (50), d'un crochet ou analogue.

9. Dispositif selon la revendication 8, caracterisé en ce que l'entraînement est muni d'un couplage de surcharge (53, 54), qui pour un freinage déterminé du chariot (33), détache celui-ci du cadre de montage (11).

10. Dispositif selon la revendication 8 ou 9, caracterisé en ce que sur le chariot (33) est disposé un levier (50), dont une extrémité (51) pour l'entraînement du chariot (33) est en prise dans un évidement correspondant du cardre de montage (11) et ainsi exécute un mouvement de bascule, qui mouve l'autre extrémité (52) du levier (50) reliée au soufflet (32) à l'orifice (26) du cadre de montage.

11. Dispositif selon l'une des revendications 1 à 7, caracterisé en ce que le chariot (33') présente des moyens pour déplacer la buse d'aspiration (36) en hauteur entre une position inférieure d'attente et une position supérieure de couplage.

12. Dispositif selon la revendication 11, caracterisé en ce que les moyens ont la forme d'un quadrilatère articulé (36', 96, 99a, 100a), par lequel la buse d'aspiration (36) est basculée à l'aide d'un moteur tout en maintenant la directoin axiale d'un contre-tuyau (87) sortant vers le haut de la base d'aspiration (36).

13. Dispositif selon la revendication 12, caracterisé en ce que le contre-tuyau (87), dans la position supérieure de couplage, se raccorde de manière bout à bout avec un tuyau (28) sortant de l'orifice (26) du cadre de montage (11).

14. Dispositif selon la revendication 13, caracterisé en ce que le tuyau (28) et le contre-tuyau (27) sont munis chacun d'une collerette (86, 88) semi-cylindrique, recouvrant un bord frontal du tuyau (28) ou du contre-tuyau (27) sur la moitié de leur périmètre, les deux collerettes formant ensemble, dans la position supérieure de couplage, un manchon entourant la zone de contact bout à bout entre le tuyau (28) et le contre-tuyau (27).

15. Dispositif selon l'une des revendications 12 à 14, caracterisé en ce que le chariot (33') et le cadre de montage (11) sont munis de palpeurs d'approche coopérant l'un avec l'autre, et coopérant par échange sur une distance limitée, dans la direction de déplacement du cadre de montage (11) ou du chariot (33'), de sorte que, lors de l'approche du cadre de montage vers le chariot (33'), juste avant d'atteindre une position, dans laquelle le tuyau (28) et le contre-tuyau (27) sont alignés, la coopération commence et le quadrilatère articulé (36', 96, 99a, 100a) est bas-culé au moyen d'un circuit de commande dans la position supérieure du couplage, tandis que, juste derrière cette position, la coopération se termine et le quadrilatère ariculé (36', 96, 99a, 100a) est basculé dans la position inférieure d'attente.

16. Dispositif selon la revendication 15, caracterisé en ce que le circuit de commande, après le retour basculant du quadrilatère articulé (36', 96, 99a, 100a), met en circuit un moteur (40) du chariot (33'), pour la poursuite du cadre de montage (11') s'en allant en avant.

17. Dispositif selon la revendication 15 ou 16, caracterisé en ce que les palpeurs d'approche sont constitués d'un réflecteur photoélectrique (89) sur le chariot (33') et d'un réflecteur sur longue distance (90) dans la direction de déplacement sur le cadre de montage (11).

Fig.1

Fig. 2

Fig. 3

Fig. 4

Fig. 5

EP 0 209 096 B1

19

Fig. 6

EP 0 209 096 B1

Fig. 7